# EUROPEAN PATENT SPECIFICATION

(11) **EP 3 225 939 B1**
(45) Date of publication and mention of the grant of the patent: **09.11.2022**
(21) Application number: 16163327.6
(22) Date of filing: 31.03.2016
(51) Int. Cl.: F25B 41/00, F25B 1/06, F25B 1/10

(54) **REFRIGERANT CYCLE WITH AN EJECTOR**
KÜHLZYKLUS MIT EINEM AUSWERFER
CYCLE RÉFRIGÉRANT AVEC UN ÉJECTEUR

(43) Date of publication of application: 04.10.2017
(73) Proprietor: Mitsubishi Electric Corporation, Chiyoda-ku Tokyo 100-8310 (JP); Mitsubishi Electric R&D Centre Europe B.V., Livingston EH54 5DJ (GB)
(72) Inventor: Nguyen, Dr. Minh, Livingston, EH54 5DJ (GB)
(74) Representative: Pfenning, Meinig & Partner mbB

(56) References cited:
- WO-A2-2013/002872
- JP-A- S59 225 259
- JP-A- 2012 117 760

## Description

The present invention relates to a refrigerant cycle which can efficiently run at part-load and/or low-heat-load. The refrigerant cycle includes an ejector which can use high-pressure hot-gas to pre-compress refrigerant vapour leaving from an evaporator as a first compression stage before passing this pre-compressed vapour to a main compressor for a second compressed stage.

An air-to-water heat pump for example becomes oversized when working at low-heat-load despite a variable speed compressor running at its minimum frequency (i.e. lowest speed). This is recognized as a problem, especially in tight and well-insulated homes that let heat pumps work at very low temperature of water flow. This results in the heat pump to cycle on and off frequently which deteriorates the efficiency, shortens the system life and increases the electric bill for the end-users.

For load modulation of an air conditioning, a system, besides using a variable speed compressor, it has also been proposed to use a hot-gas-bypass method to enable the system to run at partial heat load. By this way, a hot-gas-bypass circuit is connected to an evaporator outlet to either control the evaporator cooling capacity (i.e. outlet bypass circuit, https://www.downloads.siemens.com/download-center/Download.aspx?pos=download&fct=getasset&id1=8351) or defrost the evaporator (US 6,584,794 B2) or prevent freezing of the condenser in reverse cycle-based defrost cycle (WO 2011/092802).

In some cases of cooling applications, a different configuration of hot-gas-bypass is used to prevent the evaporator from freezing and going off on low pressure.

For heating applications using air source heat pumps, both inlet and outlet bypass circuits are known to improve the heat pump performance.

In JP 4799252, an inlet bypass circuit is suggested which enables a heat pump to run at part load or low-heat-load by bypassing refrigerant over the condenser during normal heating operation. By this way, an additional expansion valve is applied to a bypass circuit for expanding hot-gas from high-pressure of the compressor discharge to low-pressure of the evaporator inlet if the bypass circuit is connected after the main expansion valve.

Alternatively, an additional expansion valve is not required if the bypass circuit is connected before the main expansion valve, which is similar to the bypass-circuit shown for example in JP 2005-300008.

For bypass circuits in the prior art as mentioned above, high-pressure refrigerant at vapour state (i.e. hot gas) is injected directly from the compressor discharge into either immediately before the main expansion valve or immediately after the main expansion valve during normal heating operation. Both configurations of bypass circuit results in an increase of refrigerant dryness at the evaporator inlet. This means that the quality of refrigerant entering the evaporator exhibits a high fraction of vapour with less refrigerant liquid feeding to evaporator. The thermal performance of the evaporator is therefore seen to be downgraded.

Another disadvantage of the above bypass circuits is that bypassed hot gas requires the compressor to re-compress it after expanding from evaporator pressure to condenser pressure but contributes nothing to heating efficiency of the condenser.

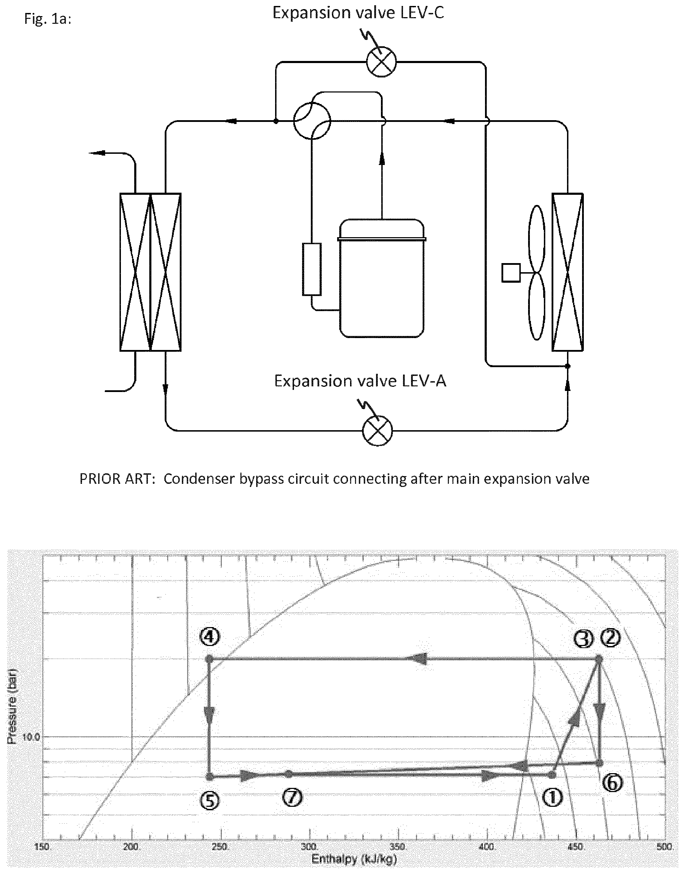

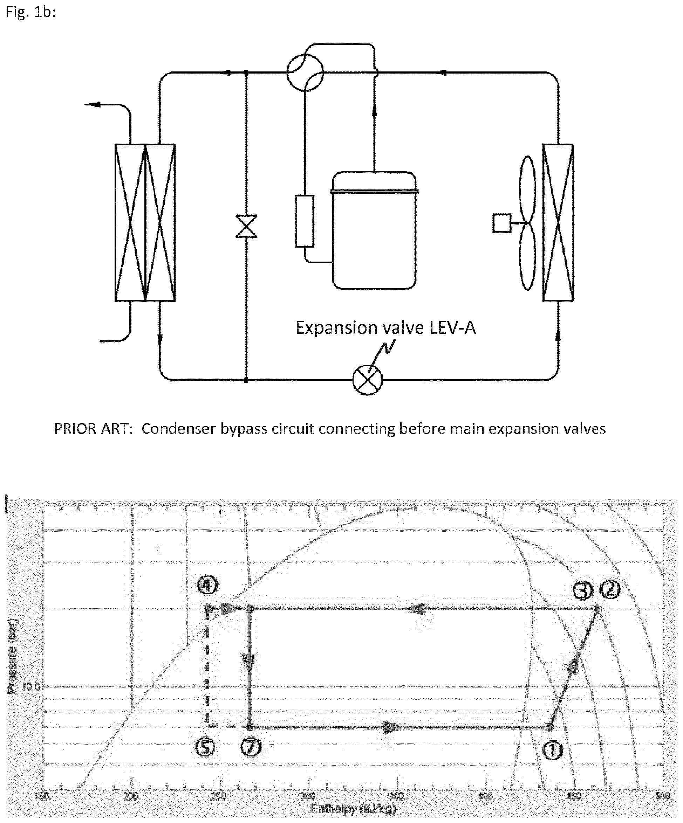

Figures 1a and 1b show examples of prior art refrigerant circuits together with the corresponding P-H diagrams. Figure 1a shows a circuit and a P-H diagram of a "condenser bypass circuit connecting after main expansion valves" in the prior art. The disadvatage is that high-pressure refrigerant vapour is bypassed and expanded by a bypass expasion valve LEV-C (from state 2 to state 6). The low-pressure refrigerant vapour after auxiliary expansion (state 6) is then mixed with the refrigerant after the main expansion (state 5).

The refrigerant dryness increases from state 5 to state 7 before feeding to the evaporator for vaporisation (from state 7 to state 1). This is the 1st disadvantage of this current bypass circuit.

Moreover bypassed refrigerant vapour is expanded from high pressure state (state 2) to low-pressure state (state 6) but compressor must spend energy to re-compress this bypassed vapour from low pressure (state 1) back to high pressure (state 2) but contribue nothing to heating capacity of condenser (condensation process from state 3 to state 4). This is the 2^{nd} disadvantage of this current bypass circuit.

Figure 1b shows a circuit and a P-H diagram of a "condenser bypass circuit connecting before main expansion valves". High pressure refrigerant vapour (state 2) is mixed with high-pressure sub-cooled refrigerant liquid after condenser (state 4). The state of the refrigerant is no longer subcooled before entering the main expansion. Consequently after expanding in main expansion valve LEV-A, the refrigerant has a higher dryness (state 7) compared with the state 5 of the case of normal refrigerant system without bypass circuit. This is a disadvantage of this current bypass JP 2012 117760 A describes a heat pump with a bypass circuit comprising three ejectors with different nozzle dimensions.

JP S59 225259 A describes a heat pump having an ejector nozzle.

Both JP 2012 117760 A and JP S59 225259 A disclose the features of the preamble of claim 1.

It is an object of the present invention to propose a refrigerant cycle which overcomes at least some of the above-mentioned problems and disadvantages.

The object is solved by the refrigerant cycle according to claim 1. The corresponding dependent claims describe advantageous embodiments of the refrigerant cycle according to claim 1.

The present invention relates to a refrigerant cycle as for example an air conditioner or a heat pump.

The refrigerant cycle of the invention comprises a compressor, a condenser, at least one expansion valve and an evaporator. The condenser is connected to a discharge of the compressor. The expansion valve is located at an opposite side of the condenser than the compressor. Thus, the condenser is between the compressor and the expansion valve. The expansion valve is connected to a first port of the evaporator.

That one entity is connected to another entity is to be understood such that refrigerant can flow within the refrigerant cycle from the one entity to the other entity. Thus, the one entity and the other entity are connected to each other in a fluid conductive manner except for possible or optional valves which might regulate or block the corresponding connections. Wherever it is said in this document that one entity can be connected to another entity, this connection may optionally be a direct connection.

According to the present invention, the refrigerant cycle comprises an ejector having a primary nozzle, a suction nozzle and a discharge nozzle. The primary nozzle according to the invention is connected to the discharge of the compressor. The suction nozzle is connected to a second port of the evaporator, which second port is different from the above-mentioned first port. Preferably, refrigerant can flow through the evaporator between the first port and the second port, preferably from the first port to the second port.

Furthermore, the discharge nozzle of the ejector is connected to a suction port of the compressor. The compressor can suck refrigerant to the suction port and discharge compressed refrigerant through the discharge port.

In normal mode, above-mentioned entities are preferably connected such that compressed refrigerant which is discharged by the compressor flows to the condenser, from the condenser to the expansion valve and from the expansion valve to the evaporator. It should be noted that on this path, the refrigerant may optionally flow through other entities arranged between the mentioned parts. However, it might be preferred that there is a direct line or a pipe between the compressor and the condenser and between the expansion valve and the evaporator.

In a preferred embodiment, the second port of the evaporator may be connected to the suction port of the compressor by a line or pipe which in the following is addressed as first line. Said first line may preferably comprise a first valve which is adapted to control the flow of refrigerant in the first line. The first valve may for example be a solenoid valve.

In a preferred embodiment of the invention, the discharge nozzle of the ejector may be connected to the first line on a compressor side of the first valve via a second line. That is, the first valve is preferably not located between the connection of the discharge nozzle with the first line and the compressor but rather between the evaporator and said connection of said discharge nozzle with the first line.

The line or pipe connecting the discharge nozzle of the ejector with said first line is referred to as second line in the following.

In a preferred embodiment, the second line may comprise a valve which is adapted to allow the control of refrigerant flow in the second line. The second valve may for example be a solenoid valve.

In a preferred embodiment of the invention, the suction nozzle of the ejector may be connected to the second port of the evaporator via a line or pipe which is referred to as suction line in the following. The suction line may be connected to the evaporator directly or may branch off the first line at any point between the evaporator and the above-mentioned first valve if the first line and the first valve are provided.

In a preferred embodiment, the primary nozzle of the ejector may be connected with to a line connecting the compressor discharge with the condenser. The primary nozzle may be connected to this line via a line or pipe which is referred to as third line in the following. In a preferred embodiment, the third line may comprise a valve which is referred to as third valve in the following, the third valve being adapted to allow the control of refrigerant flow in the third line. The third valve may for example be a solenoid valve or a proportional valve for controlling the refrigerant flow rate entering the ejector (i.e. bypassing the ejector).

That a valve may control the flow of refrigerant in a line or pipe means that the valve may be controlled between a fully open state and a fully closed state. The control may be binary so that the valve is either fully open or fully closed or it may be such that a predetermined number of intermediate states can be adopted corresponding to intermediate opening degrees. Optionally, the control may also be continuously so that the opening degree can be adjusted continuously between fully open and fully closed. The open state of a valve is this state where the valve allows refrigerant to pass through while the closed state is the state blocking the refrigerant flow.

An ejector is a device which produces a suction effect at its suction nozzle or suction port (these terms shall be regarded synonyms in the present context) if a fluid stream flows into its primary nozzle and out of its discharge nozzle. The effect is achieved by Bernoulli's principle, decreasing the static pressure in the vicinity of the fluid flowing into the ejector through the primary nozzle and out of the discharge nozzle. The structure of the ejector may be such that the primary nozzle opens into a space within the ejector. The primary nozzle may create a jet of refrigerant extending from the primary nozzle into the discharge nozzle. The velocity of the jet decreases the pressure in said internal space within the ejector. The suction nozzle or suction port also opens into said internal space so that the pressure at the outside opening of the suction nozzle or suction port is decreased with the pressure in said internal space.

The primary nozzle may be formed as a cylindrical channel whose cylinder axis is coaxial to the direction in which the jet flows in operation. The discharge nozzle may be formed as a straight channel whose longitudinal direction is coaxial to said axis of the channel in the primary nozzle. Preferably, the channel of the discharge nozzle may have a diameter increasing in the direction away from the primary nozzle.

According to the invention, the ejector has a proportional valve, which is adapted to regulate the flow of refrigerant through the primary nozzle. In the preferred embodiment, the valve may be constituted by a needle which is located within the channel of the primary nozzle. By moving the needle towards the opening of the primary nozzle, the effective area of this opening can be adjusted. Thus, by moving said needle, the flow rate in the primary nozzle can be adjusted. Preferably, the needle may be formed such that it completely closes the opening of the primary nozzle towards the internal space if it is brought into contact with the edge of this opening.

In an advantageous embodiment the refrigerant cycle may comprise a further expansion valve which is connected to the condenser at a port which is not the port to which the outlet side of the compressor is connected. Such valve may allow to control the subcooling degree after the condenser. As when bypass circuit is activated, this may affect subcooling degree after the condenser due to change of refrigerant flow entering the condenser. Thus the further expansion valve LEV-B needs to control to maintain a suitable subcooling degree.

In the preferred embodiment, the refrigerant cycle of the present invention may comprise an accumulator which is adapted to collect liquid refrigerant. If liquid or two-phase refrigerant enters the accumulator, the liquid refrigerant will be collected in the accumulator. The accumulator may have a first port through which the refrigerant enters and a second port through which refrigerant exits. Preferably, the accumulator may be located between the condenser and the main expansion valve.

In the following, the invention shall be described by way of example with reference to figures. Same reference signs denote same or like features.
- Figure 1a and 1b: show examples of prior art refrigerant cycles and corresponding P-H-diagrams,
- Figure 2: shows a diagram of a refrigerant cycle according to the present invention,
- Figure 3: shows a P-H-diagram for the cycle shown in Figure 1, and
- Figure 4: shows an optional example of an adjustable ejector to be used in the present invention.

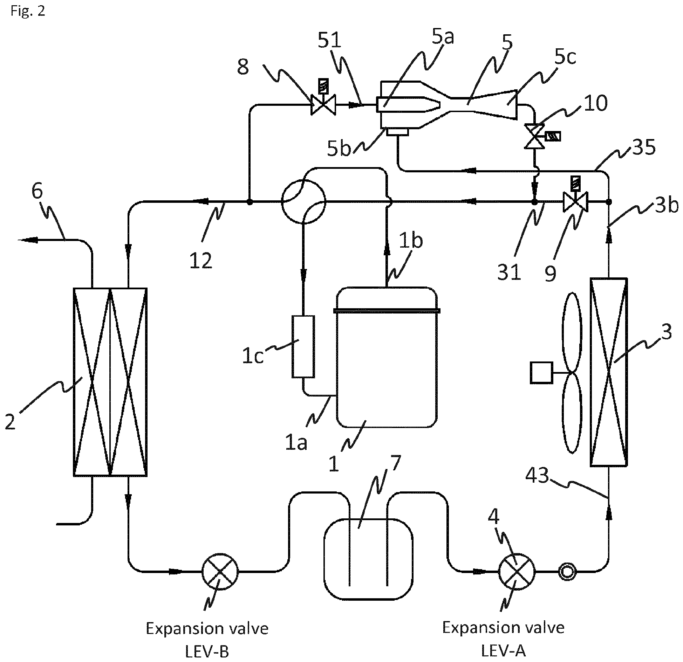

Figure 2 shows a schematic example of a refrigerant cycle according to the present invention. The refrigerant cycle comprises a compressor 1, a discharge side 1b of which is connected to a condenser 2 via a pipe 12. The condenser 2 may be included in a heat exchanger 2 which can exchange heat between the refrigerant cycle and a secondary side cycle which may for example be a water cycle 6.

The condenser 2 is connected to an expansion valve LEV-A 4 via an optional further expansion valve LEV-B and an optional accumulator 7. Said expansion valve LEV-A 4 is connected to a first port 3a of the evaporator 3 via a line 43.

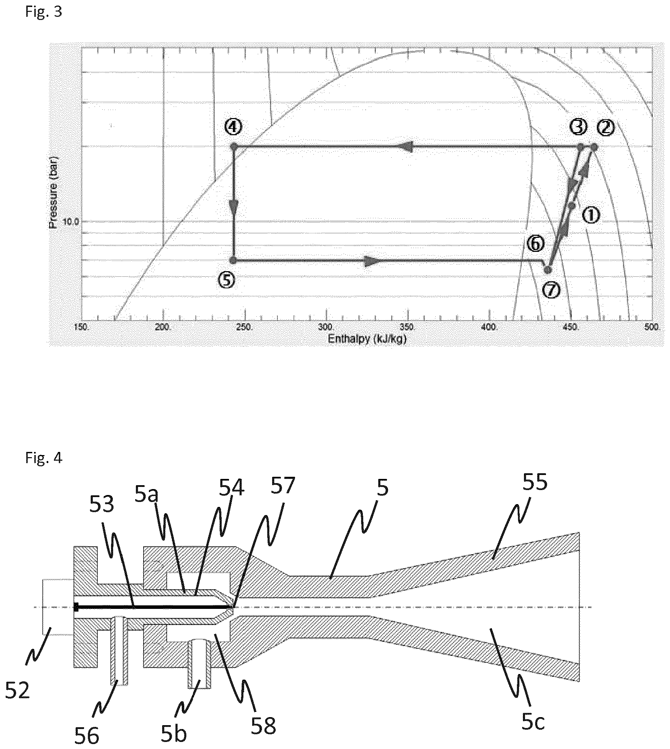

According to the present invention, the refrigerant cycle comprises an ejector 5 having a primary nozzle 5a, a suction nozzle 5b and a discharge nozzle 5c. In Figure 1, the external opening of the corresponding nozzles 5a, 5b, 5c is not distinguished from the nozzle 5a, 5b, 5c itself. A detailed example of the ejector is for example shown in Figure 3.

The primary nozzle 5a is connected to said line 12 via a line 51. Line 51 comprises a proportional valve 8 which allows control of the flow of refrigerant through line 51.

The suction nozzle 5b of the ejector 5 is connected to a second port 3b of the evaporator 3 via a line 35.

The discharge nozzle 5c of the ejector 5 is connected to a suction side 1a of the compressor 1.

Directly after the discharge port 5c of the ejector 5, a solenoid valve 10 is arranged which allows to control the flow of refrigerant out of the discharge port 5c.

In the example of Figure 2, the second port 3b of the evaporator 3 is connected to the suction port 1a of the compressor 1. A line 31 connects the second port 3b of the evaporator 3 with the line connecting the discharge 5c of the ejector 5 with the suction port 1a of the compressor 1. A solenoid 9 is located in the line 31, by which valve the refrigerant flow from the second port 3b of the evaporator 3 to the suction port 1a of the compressor 1 can be controlled.

The valves 8, 9 and 10 allow switching the refrigerant cycle of Figure 2 between a normal mode and a mode for part-load or low-heat-load. In normal mode, valves 8 and 10 are closed to block the flow of refrigerant while valve 9 is opened to let through the refrigerant. Thus, refrigerant flows out of the compressor 1 through the condenser 2, optionally through the further expansion valve LEV-B, optionally through the accumulator 7, then through the expansion valve LEV-A 4 and into the evaporator 3. From the evaporator 3, the refrigerant then flows through valve 9 back into the compressor 1.

A compressor accumulator 1c may be integrated with the suction line of the compressor 1. It is advantageous for this bypass configuration. In case the ejector 5 sucks liquid refrigerant from the evaporator 3 and discharges this liquid refrigerant to compressor suction line 1a, compressor accumulator 1c will collect liquid refrigerant and let only vapour refrigerant reach compressor suction port.

In a mode for part-load and/or low-heat-load, valve 9 is closed to block the refrigerant flow. On the other hand, valves 8 and 10 are opened to let through the refrigerant. In this mode, a part of the refrigerant still flows from the compressor 1 through the condenser 2, optionally through further expansion valve LEV-B, optionally through the accumulator 7, through expansion valve LEV-A 4 and into the evaporator 3. However, another part of the refrigerant flowing out of the compressor 1 is branched into line 51 through valve 8 and into the primary nozzle 5a of the ejector. A suction is thereby produced at the suction port 5b and pre-compressed refrigerant exits the ejector 5 through the discharge opening 5c. Line 51 together with the ejector forms a bypass line bypassing the condenser 2. Thus, hot gas is bypassed over the condenser 2 from the compressor discharge 1b. Consequently, the heating capacity of the condenser is reduced while the compressor still keeps running continuously without the on-off cycling described above with respect to the prior art. On the other hand, since the refrigerant is pre-compressed in the ejector 5, the power consumption of the main compressor 1 can be reduced in the part-load and/or low-heat-load operation compared to the normal mode and also compared to low-heat-load modes known from the prior art.

The refrigerant circuit of the invention may comprise a four-way valve which connects the discharge 1b of the compressor, the condenser 2, the suction side 1a of the compressor and the line 31. Above described lines 12 and 31 then pass through this four-way valve correspondingly. This valve may allow a defrost operating mode based on a reverse cycle. When this system reverses its cycle for defrost mode, valves 8 and 10 are fully closed while valve 9 is fully opened. By this way, bypass circuit with ejector is isolated from reverse cycle operation for defrosting.

Figure 3 shows a P-H-diagram of the low-heat-load operation of the refrigerant cycle shown in Figure 2. Numbers in circles in Figure 3 show different states of the refrigerant within the refrigerant cycle of Figure 1. Starting at the compressor suction port 1a, the refrigerant is in state 1. The compressor 1 compresses the refrigerant and discharges compressed refrigerants through discharge port 1b. At the discharge port 1b, the refrigerant is in a state 2.

In the mode for part-load and/or low-heat-load, valve 8 in Figure 2 is opened.

Thus, a part of the refrigerant flows to the condenser 2 while another part of the refrigerant flows to the ejector 5. In Figure 3, the division of the refrigerant parts happens at state 3. The refrigerant entering the ejector in the primary nozzle 5a is expanded to state 7.

The other part of the refrigerant at state 3 flows through the condenser 2 where the specific enthalpy is reduced. Thus, the state of the refrigerant flowing through the condenser 2 moves from point 3 to point 4 in Figure 3. After passing through the condenser 2, the refrigerant is expanded optionally in the further expansion valve LEV-B, and then in the expansion valve LEV-A 4 and therefore moves from point 4 to point 5 in Figure 3. Having passed through the expansion valve LEV-A 4, the refrigerant then flows into the evaporator 3 increasing its specific enthalpy. The refrigerant therefore moves from point 5 to point 6 in Figure 3. The refrigerant being discharged at the second port 3b of the evaporator 3 flows into the suction port 5b of the ejector 5 where it is pre-compressed to a higher pressure indicated at point 1 in Figure 3.

The advantageous effect of the invention can be understood in Figure 3. Due to the fact that the ejector 5 pre-compresses the refrigerant from point 7 to point 1, the compressor 1 only needs to compress the refrigerant from point 1 to point 2 rather than from point 7 to point 2. The compressor load is therefore reduced.

The minor pressure reduction between points 6 and 7 in Figure 3 is due to the fact that the ejector 5 actively sucks the refrigerant out of the evaporator 3.

In normal mode, the diagram of Figure 3 would assume a shape where only shapes 2, 4, 5 and 6 are present. The compressor will compress the refrigerant from point 6 to point 2.

Figure 4 shows an example of an ejectors which can be adopted in the present invention. The ejectors shown in Figure 4 comprises a primary nozzle 5a which has a cylindrical outer shape 54. Within the primary nozzle 5a, a channel is provided which runs coaxial to the axis of the cylindrical outer shape of the nozzle 5a. A needle 53 is provided in the channel within the nozzle 5a. The needle 53 is straight and lies coaxial to the cylindrical axis of the nozzle 5a. The needle 53 is held by a solenoid coil 52 by which it can be actuated in the direction of the cylindrical axis of the primary nozzle 5a. On the side of the solenoid coil 52, an entry port 56 is provided through which refrigerant can flow into the channel within the primary nozzle 5a. On the other side of the channel, the primary nozzle 5a has an opening 57 through which refrigerant can exit the primary nozzle 5a. The nozzle 5a with its opening 57 opens into an inner space 58 of the ejector 5. The discharge nozzle 5c opens into the inner space 58. The discharge nozzle 5c has a straight shape which is coaxial to the cylinder axis of the primary nozzle 5a.

The suction nozzle 5b or suction port 5b opens into the inner space 58 in a direction perpendicular to the cylinder axis of the primary nozzle 5a.

The end of the primary nozzle 5a surrounding the opening 57 has a conical shape. The opening of the discharge nozzle 5c into the inner space 58 has a corresponding conical shape. The outer wall of the conical tip of the primary nozzle 5a and the inner wall of the conical opening of the discharge nozzle 5c are at a distance from each other. Refrigerant flowing out of the opening 57 into the opening 58 therefore runs through a certain free space and creates a low pressure within the inner space 58. By this lower pressure, refrigerant can be sucked into the suction port 5b.

## Claims

1. Refrigerant cycle comprising
a compressor (1),
a condenser (2) connected to a discharge of the compressor (1),
at least one expansion valve (LEV-B) at an opposite side of the condenser (2) than the compressor (1),
and
an evaporator (3) having a first port connected to the expansion valve (LEV-B),
further comprising
an ejector (5) having a primary nozzle (5a), a suction nozzle (5b) and a discharge nozzle (5c),
wherein the primary nozzle (5a) is connected to the discharge of the compressor (1),
the suction nozzle (5b) is connected to a second port, different from the first port, of the evaporator (3) and
the discharge nozzle (5c) is connected to a suction port (1a) of the compressor (1), **characterized in that** the ejector (5) comprises a proportional valve, adapted to regulate a flow of refrigerant through the primary nozzle (5a).

2. Refrigerant cycle according to the preceding claim
wherein the second port of the evaporator (3) is connected to the suction port (1a) of the compressor (1) by a first line (31).

3. Refrigerant cycle according to the preceding claim wherein the first line (31) comprises a first valve (9) being adapted to control flow of refrigerant in the first line (31).

4. Refrigerant cycle according to the preceding claim
wherein the discharge nozzle (5c) is connected to the first line (31) on a compressor (1) side of the first valve (9) via a second line, the second line comprising a second valve (10) being adapted to control flow of refrigerant in the second line.

5. Refrigerant cycle according to one of the preceding claims, wherein the suction nozzle (5b) is connected to the second port of the evaporator (3) via a suction line.

6. Refrigerant cycle according to one of the preceding claims,
wherein the primary nozzle (5a) is connected to a line (12) connecting the compressor discharge (1b) and the condenser (2) via a third line (51), the third line (51) comprising the proportional valve (8) being adapted to control flow of refrigerant in the third line (51).

7. Refrigerant cycle according to one of the preceding claims, comprising a further expansion valve connected to the condenser (2) at a port opposite the compressor (1).

## Patentansprüche

1. Kältemittelkreislauf, umfassend
einen Verdichter (1),
einen Kondensator (2), der mit einem Auslass des Verdichters (1) verbunden ist, mindestens ein Expansionsventil (LEV-B) auf einer dem Verdichter (1) gegenüberliegenden Seite des Kondensators (2),
und
einen Verdampfer (3), aufweisend eine erste Öffnung, die mit dem Expansionsventil (LEV-B) verbunden ist,
ferner umfassend
einen Ejektor (5) mit einer Primärdüse (5a), einer Saugdüse (5b) und einer Auslassdüse (5c),
wobei die Primärdüse (5a) mit dem Auslass des Verdichters (1) verbunden ist,
die Saugdüse (5b) mit einer zweiten, von der ersten Öffnung verschiedenen, Öffnung des Verdampfers (3) verbunden ist und
die Auslassdüse (5c) mit einer Saugöffnung (1a) des Verdichters (1) verbunden ist, **dadurch gekennzeichnet, dass** der Ejektor (5) ein Proportionalventil umfasst, das ausgelegt ist, einen Kältemittelstrom durch die Primärdüse (5a) zu regulieren.

2. Kältemittelkreislauf nach dem vorhergehenden Anspruch, wobei die zweite Öffnung des Verdampfers (3) mit der Saugöffnung (1a) des Verdichters (1) durch eine erste Leitung (31) verbunden ist.

3. Kältemittelkreislauf nach dem vorhergehenden Anspruch, wobei die erste Leitung (31) ein erstes Ventil (9) umfasst, das ausgelegt ist, den Kältemittelstrom in der ersten Leitung (31) zu steuern.

4. Kältemittelkreislauf nach dem vorhergehenden Anspruch, wobei die Auslassdüse (5c) auf einer Seite des Verdichters (1) des ersten Ventils (9) über eine zweite Leitung mit der ersten Leitung (31) verbunden ist, wobei die zweite Leitung ein zweites Ventil (10) umfasst, das ausgelegt ist, den Kältemittelstrom in der zweiten Leitung zu steuern.

5. Kältemittelkreislauf nach einem der vorhergehenden Ansprüche, wobei die Saugöffnung (5b) über eine Saugleitung mit der zweiten Öffnung des Verdampfers (3) verbunden ist.

6. Kältemittelkreislauf nach einem der vorhergehenden Ansprüche, wobei die Primärdüse (5a) mit einer Leitung (12) verbunden ist, die den Verdichterauslass (1b) und den Kondensator (2) über eine dritte Leitung (51) verbindet, wobei die dritte Leitung (51) das Proportionalventil (8) umfasst, das ausgelegt ist, den Kältemittelstrom in der dritten Leitung (51) zu steuern.

7. Kältemittelkreislauf nach einem der vorhergehenden Ansprüche, umfassend ein weiteres Expansionsventil, das mit dem Kondensator (2) an einer dem Verdichter (1) gegenüberliegenden Öffnung verbunden ist.

## Revendications

1. Cycle de fluide frigorigène comprenant
un compresseur (1),
un condenseur (2) connecté à l'évacuation du compresseur (1), au moins une soupape d'expansion (LEV-B) située au niveau du côté opposé du condenseur (2) par rapport au compresseur (1),
et
un évaporateur (3) présentant un premier orifice connecté à la soupape d'expansion (LEV-B),
comprenant en outre
un éjecteur (5) présentant une buse primaire (5a), une buse d'aspiration (5b) et une buse d'évacuation (5c),
dans lequel la buse primaire (5a) est connectée à l'évacuation du compresseur (1),
la buse d'aspiration (5b) est connectée à un second orifice, différent du premier orifice, de l'évaporateur (3), et
la buse d'évacuation (5c) est connectée à un orifice d'aspiration (1a) du compresseur (1), **caractérisé en ce que** l'éjecteur (5) comprend une soupape proportionnelle, adaptée afin de réguler l'écoulement d'un fluide frigorigène à travers la buse primaire (5a).

2. Cycle de fluide frigorigène selon la revendication précédente, dans lequel le second orifice de l'évaporateur (3) est connecté à l'orifice d'aspiration (1a) du compresseur (1) par une première canalisation (31).

3. Cycle de fluide frigorigène selon la revendication précédente, dans lequel la première canalisation (31) comprend une première soupape (9) adaptée afin de commander le flux de fluide frigorigène dans la première canalisation (31).

4. Cycle de fluide frigorigène selon la revendication précédente, dans lequel la buse d'évacuation (5c) est connectée à la première canalisation (31) du côté compresseur (1) de la première soupape (9) par l'intermédiaire d'une deuxième canalisation, la deuxième canalisation comprenant une seconde soupape (10) adaptée afin de commander le flux de fluide frigorigène dans la seconde canalisation.

5. Cycle de fluide frigorigène selon l'une quelconque des revendications précédentes, dans lequel la buse d'aspiration (5b) est connectée au second orifice de l'évaporateur (3) par l'intermédiaire d'une canalisation d'aspiration.

6. Cycle de fluide frigorigène selon l'une quelconque des revendications précédentes, dans lequel la buse primaire (5a) est connectée à une canalisation (12) qui connecte l'évacuation du compresseur (1b) et le condenseur (2), par l'intermédiaire d'une troisième canalisation (51), la troisième canalisation (51) comprenant la soupape proportionnelle (8) adaptée afin de commander le flux de fluide frigorigène dans la troisième canalisation (51).

7. Cycle de fluide frigorigène selon l'une quelconque des revendications précédentes, comprenant une autre soupape d'expansion connectée au condenseur (2) au niveau d'un orifice opposé au compresseur (1).
